# EUROPEAN PATENT APPLICATION

(11) **EP 4 531 020 A1**
(43) Date of publication of application: **02.04.2025**
(21) Application number: 23199905.3
(22) Date of filing: 26.09.2023
(51) Int. Cl.: G08G 5/04, G08G 5/00, G01S 13/933

(54) **SYSTEM AND METHOD FOR AIRCRAFT OBSTACLE DETECTION**

(71) Applicant: Rockwell Collins, Inc., Cedar Rapids, IA 52498 (US)
(72) Inventor: JACOBSON, Randy H, Melbourne, Florida 32901-6725 (US); TURCIOS, Felix B, Cedar Rapids, Iowa 52402 (US); FRANZINI, Giovanni, Glanmire, Cork City T45 FD66 (IE); RYAN, Niall Christopher, Milltown Road, Tuam Galway H54 E302 (IE)
(74) Representative: Dehns

(57) **Abstract**

A collision avoidance system (130) for aggregating and processing data when an aircraft is on or near the ground. The collision avoidance system includes a data input module (132) configured to obtain object data and contextual data from a plurality of aircraft systems (110, 120). The collision avoidance system further includes a processor (134) configured to combine the object data into an aggregated list of detected objects, and label the aggregated list of detected objects using the contextual data to form a contextualised list of detected objects for use in determining collision avoidance. The collision avoidance system further includes a data output module (136) configured to output the contextualised list of detected objects to a set of output systems (140).

## Description

### TECHNICAL FIELD

The present disclosure relates to a system and method for detection and alerting of obstacles on path during surface and near-surface operations of aircraft.

### BACKGROUND

Surface awareness technologies on an aerodrome surface may be used to detect obstacles in the vicinity of an aircraft. For example, vehicles may be equipped with Automatic Dependent Surveillance - Broadcast (ADS-B) surveillance technologies such that positional information can be automatically broadcasted to other aircraft or ground stations without the use of radar.

Obstacle awareness is important for maintaining safe and efficient operation of an aircraft near and on an aerodrome surface. The aerodrome surface may refer to, but is not limited to, the runways, taxiways, aprons, etc., from which aircraft operations occur.

Sensing system technologies may be cooperative or non-cooperative. Cooperative sensing systems are able to process data transmitted by other vehicles. Non-cooperative sensing systems are able to process information from objects which do not actively transmit information to other objects.

A wide variety of situations and operational environments may present themselves in the aerodrome, and different sensing technologies may be required to detect different types of obstacles. However, it is possible that some obstacles may remain undetected, such as vehicles not equipped with ADS-B, wildlife, buildings and debris. This limits the surface awareness to the runway environment and leaves a significant awareness gap in the ability to execute traditional, low-visibility and autonomous surface operations.

It is an aim to provide an improved system and method for detecting obstacles that may present a danger to an aircraft.

### SUMMARY

According to the present disclosure, there is provided a collision avoidance system for aggregating and processing data when an aircraft is on or near the ground, the collision avoidance system comprising:
a data input module configured to obtain object data and contextual data from a plurality of aircraft systems, wherein:
   the object data relates to objects detected around the aircraft; and
   the contextual data relates to information about the aircraft's route and
   environment;
a processor configured to:
   combine the object data into an aggregated list of detected objects; and
   label the aggregated list of detected objects using the contextual data to form a contextualised list of detected objects for use in determining collision avoidance; and
a data output module configured to output the contextualised list of detected objects to a set of output systems.

Collecting both object data and contextual data results in the use of a wide range of data to determine a list of detected objects, and thus may form a more accurate and relevant list of detected objects. Combining the data from multiple types of sensors may result in a more holistic, reliable and detailed view of the aircraft's environment.

The contextualisation of the aggregated list of objects allows for object relevance filtering and customisation of the data based on end user preference. This may result in an improved and more unified situational awareness around the aircraft.

In some examples, the objects detected around the aircraft may include one or more of: other aircraft, aerodrome vehicles, aerodrome signage, foreign objects, debris, poles, wildlife and buildings. More generally, the objects detected around the aircraft may be interpreted as any type of object which can pose a threat to the aircraft.

Providing a collision avoidance system that is capable of detecting a wide range of object types may result in more effective and versatile collision avoidance.

In some examples, the collision avoidance system may be configured to, when the aircraft is within a specified range of the aerodrome surface, commence operation as the aircraft approaches the ground, remain active during aerodrome surface operations, and cease operation after take-off.

For example, the specified range may be within 10,000 m (e.g., within 5,000 m) of the aerodrome surface and/or below 500 m (e.g., below 300 m) above the elevation of the aerodrome surface. The aerodrome surface may refer to, but is not limited to, the runways, taxiways, aprons, etc., from which aircraft operations occur.

Specifying a particular operation range of the system from the aerodrome surface may reduce the overall power consumption of the system since it is inactive during flight. A predetermined range may be used based on existing data, e.g., from databases.

In some examples, the collision avoidance system may support either manned or unmanned aircraft. For example, the system may support a pilot and/or flight crew on a manned aircraft, or the system may be used by a downstream system for controlling movement of the aircraft on the ground, such as in autonomous taxiing operations.

Providing a collision avoidance system which is suitable for both manned and unmanned operation may result in a more adaptable system which is easy to use across a wide range of aircraft types.

In some examples, the plurality of aircraft systems may comprise input systems configured to provide the object data. The plurality of aircraft systems may also comprise support systems configured to provide the contextual data.

The aircraft's own subsystems may comprise, but are not limited to the non-cooperative sensing systems, cooperative sensing systems and the navigation systems.

In some examples, the input systems may comprise non-cooperative sensing systems comprising sensors on board the aircraft capable of detecting objects not actively providing information about themselves. The sensors may be vision-based sensors. The input systems may also comprise cooperative sensing systems comprising sensors capable of detecting data transmitted by other vehicles relating to the position and velocity of the other vehicles. The input systems may also comprise external surveillance systems and services capable of detecting data about objects on the aerodrome surface.

The data received by the non-cooperative sensing systems about objects not actively providing information about themselves may include objects which are not equipped with ADS-B technologies. The data received by the cooperative sensing systems and transmitted by other vehicles may include vehicles which are equipped with ADS-B technologies.

In some examples, the support systems may comprise navigation systems which are capable of providing information about one or more of the aircraft's position, velocity and heading. The support systems may also comprise taxi navigation and management systems which are capable of providing information about one or more of the aircraft's position, taxi route and the trajectory of other vehicles. The support systems may also comprise databases which are capable of providing information about one or more of: airport runways, airport taxiways, non-movement area layouts and aerodrome structures. The support systems may also comprise the non-cooperative sensing systems.

The taxi navigation systems and the taxi management systems may provide information to support surface operations. The non-cooperative sensing systems may be capable of providing support information in the form of real-time information about the aircraft's environment. For example, the data from the non-cooperative sensing systems may be used to discriminate obstacles that are on path (e.g., on the taxiway or runway) from ones that are out of path, and thus distinguish between obstacles representing a threat against ones which do not pose any danger to the aircraft.

In some examples, the processor may be arranged to aggregate data from multiple sensing systems using one or more of: heuristic algorithms, machine learning models and neural networks.

This may result in more efficient processing of data, better identification of trends and patterns in the data, and improved automation of data processing.

In some examples, the contextualised list of detected objects may include threat levels for each object.

For example, the list of detected objects may be displayed on a screen in the form of a map, with colour indications correlating to the threat level of each object. This may allow the end user to make real-time judgements of object relevance to the aircraft.

In some examples, the output systems may comprise human-machine interfaces which are capable of providing information to the pilot and/or flight crew. The human-machine interfaces may communicate information via audio, visual and/or tactile means, e.g., via one or more of a screen, a dashboard, an audio alert and a vibrating seatback.

The output systems may also comprise ownship guidance systems (e.g., comprising taxi guidance systems), which are capable of providing automated control for movement of the aircraft on the aerodrome surface. As used herein, the term "ownship" may refer to one's own aircraft, e.g., the aircraft comprising a collision avoidance system.

The output systems may also comprise the non-cooperative sensing systems which, using the contextualised list of detected objects, are capable of supporting internal detection and/or tracking and resolving ambiguities in their detection algorithms. The output systems may also comprise the external surveillance systems and services which, using the contextualised list of detected objects, are capable of improving the external surveillance systems and services' situational awareness of connected clients, and/or improving the situational awareness of the connected clients.

The output systems may comprise downstream consumers which receive output information from the data output module of the processing system in the form of the contextualised list of objects detected and their features, including, but not limited to, threat levels for each object.

In some examples, the aggregated list of detected objects may be provided with georeferenced information regarding the position, velocity and heading of each object.

Furthermore, the information provided by the navigation system may be used to convert data from the ownship weather radar into a georeferenced coordinate system.

In some examples, the aircraft's environment may be divided into proximity zones based on proximity to the aircraft, such that the collision avoidance system is configured to track any one object as the object moves through different proximity zones.

This may allow the aircraft to track any one object as the object moves through different proximity zones. Since different zones have different characteristics, different sensors may be used for each zone. Therefore, each zone may be appropriately weighted to fuse and prioritise data. This may result in an improved comprehensive situational awareness of the ownship environment.

In some examples, the proximity zones may comprise a near-field zone and a far-field zone. The near-field zone may be represented using occupancy grid maps and the far-field zone may provide information and predictions about object position and/or velocity using Kalman filters.

Using occupancy grid maps to represent a near-field zone allows for clear and efficient display of obstacle information, e.g., a grid centred on an ownship which shows areas occupied by obstacles and areas which are obstacle-free. Occupancy grids maps are also more suitable outputs for visual sensors such as cameras, which are not able to represent an object as a point representation.

Organising the information into a near-field zone and a far-field zone may allow for simpler information density representation management.

According to the present disclosure, there is also provided a method of aggregating and processing of data when an aircraft is on or near the ground, the method comprising:
obtaining, using a data input module, object data and contextual data from a plurality of aircraft systems, wherein;
   the object data relates to objects detected around the aircraft; and
   the contextual data relates to information about the aircraft's route and environment;
combining, at a processor, the object data into an aggregated list of detected objects;
labelling, at the processor, the aggregated list of detected objects using the contextual data to form a contextualised list of detected objects for use in determining collision avoidance; and
outputting, using a data output module, the contextualised list of detected objects to a set of output systems.

In some examples, the combining may comprise aggregating data from the aircraft sensors. The combining may also comprise aggregating data from sensors external to the aircraft.

Combining data from both the aircraft sensor and sensors external to the aircraft may result in a more holistic, reliable and detailed view of the aircraft's environment.

In some examples, the aggregated list of detected objects may be provided with georeferenced information regarding the position, velocity and heading of each object.

In some examples, the labelling may comprise using the contextual data to determine the relevance of the detected objects to the aircraft. The labelling may further comprise determining one or more of threat level information, alerts and indications for each of the detected objects.

It will be appreciated that all the features of the system described herein may equally apply to the method described herein, and vice versa.

Features of any aspect or example described herein may, wherever appropriate, be applied to any other aspect or example described herein. Where reference is made to different examples or sets of examples, it should be understood that these are not necessarily distinct but may overlap.

### BRIEF DESCRIPTION OF THE DRAWINGS

One or more non-limiting examples will now be described, by way of example only, and with reference to the accompanying figures in which:
Figure 1 shows a multi-sensor system for aircraft object detection;
Figure 2 shows a process flow diagram for the system of Figure 1;
Figure 3 shows a multi-sensor system implementation based on ADS-B and weather radar sensors;
Figure 4 shows a process flow diagram for the system of Figure 3;
Figure 5 shows near-field and far-field proximity zones around an aircraft.

### DETAILED DESCRIPTION

The examples described herein are used for aircraft operation near and on an aerodrome surface, but other applications are also envisaged and the examples are not limited to this use.

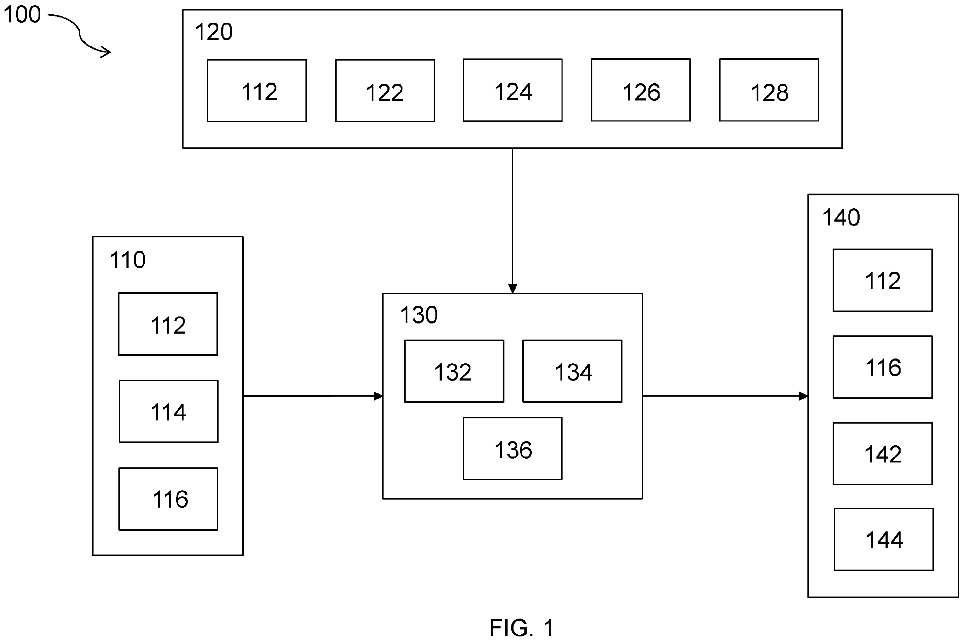

Figure 1 shows a system 100 for aggregation and processing of data on objects detected by different sensing systems either on board (i.e., "ownship" systems) or external to an ownship in accordance with one or more examples of the present disclosure. The system 100 comprises at least input systems 110, support systems 120, a processing system 130 and output systems 140.

The input systems 110 comprise a plurality of sensing systems configured to provide and process input information related to detected objects. This input information is received by a data input module 132 of the processing system 130. The plurality of sensing systems includes non-cooperative sensing systems 112, cooperative sensing systems 114, and external surveillance systems and services 116.

The non-cooperative sensing systems 112 include sensing technologies onboard the ownship which are capable of detecting objects not actively providing information about themselves. For example, the non-cooperative sensing systems 112 include vision-based sensors such as cameras, radars, light detection and ranging (LiDAR) systems. For example, the non-cooperative sensing systems 112 provide object data using a nose-gear camera which detects wildlife (e.g., a deer) crossing the taxiway.

The cooperative sensing systems 114 include ADS-B-based systems which process data transmitted by other vehicles regarding their position, velocity and other information on their status and operations, e.g., through communication channels.

The external surveillance systems and services 116 include Airport Surface Detection Equipment Model X (ASDE-X) technologies which provide data about objects in the aerodrome, e.g., through data links.

The support systems 120 comprise a plurality of other aircraft systems configured to provide support information not directly related to the detected objects. This support information is also provided to the data input module 132 of the processing system 130. The plurality of other aircraft systems includes navigation systems 122, taxi navigation systems 124, taxi management systems 126, databases 128 and the non-cooperative sensing systems 112.

The navigation systems 122 provide information about ownship position, velocity and heading. The taxi navigation systems 124 and the taxi management systems 126 provide information to support surface operations. The taxi navigation systems 124 provide information about ownship position within the airport. The taxi management systems 126 provide information regarding ownship taxi route and/or the intended trajectory of other cooperating vehicles. The databases 128 contain airport maps with prior information on runways, taxiways and non-movement area layouts, as well as information about aerodrome buildings and structures.

The non-cooperative sensing systems 112 are also capable of providing support information in the form of real-time information about the ownship environment. For example, the non-cooperative sensing systems 112 comprise a vision-based sensing system which can provide environment perception data including a list of objects detected in its field of view, as well as information such as taxiway and/or runway boundaries and runway status lights. This information is used to discriminate obstacles that are on path from ones that are out of path, and thus distinguish between obstacles representing a threat against ones which do not pose any danger.

In one example, the non-cooperative sensing systems 112 provide environmental information using a nose-gear camera which detects painted markings on the runway. This environmental information is then used for object relevance filtering and/or determining ownship position and navigation.

The ownship subsystems comprise the non-cooperative sensing systems 112, the cooperative sensing systems 114 and the navigation systems 122.

The processing system 130 comprise the data input module 132, a processor 134 and a data output module 136. The processor 134 processes, at the data input module 132, the data and information collected by the input systems 110 and the support systems 120 to derive a contextualised list of objects detected and their features, including, but not limited to, threat levels for each object. This provides a unified situational awareness of the objects detected close to the ownship or along its path, particularly of objects which may present a danger to the ownship. The processor 134 is configured to carry out the various processes or methods described in the present disclosure.

The output systems 140 comprise downstream consumers which receive output information from the data output module 136 of the processing system 130 in the form of the contextualised list of objects detected and their features, including, but not limited to, threat levels for each object. The downstream consumers include human-machine interfaces (HMIs) 142, ownship guidance systems 144, the non-cooperative sensing systems 112 and the external surveillance systems and services 116.

The HMIs 142 comprise dedicated HMIs in the flight deck, and provide information to the pilot and/or flight crew. The HMIs communicate information via audio, visual and/or tactile means, e.g., via one or more of a screen, a dashboard, an audio alert and a vibrating seatback. In a preferred example, the HMIs 142 provide information such as maps and routes, in addition to information about the detected objects. The ownship guidance systems 144 include taxi guidance systems for automated control of aircraft movement on the aerodrome surface.

The external surveillance systems and services 116 receive the output information to improve their situational awareness of connected clients, especially for objects which are otherwise difficult to detect, such as foreign objects and debris on taxiways and runways. The output information is also used to improve the situational awareness of the connected clients.

The output information is also provided to the non-cooperative sensing systems 112, such as weather radars. The processed information about detected objects support sensor internal detection and/or tracking, and improve the performance of the non-cooperative sensing systems 112 by providing data in order to resolve ambiguities in their detection algorithms.

The system 100 is configured to support a flight crew on a manned aircraft. The system 100 is also configured to be used by a downstream system for controlling movement of the aircraft on the ground, such as in autonomous taxiing operations.

The system 100 detects objects such as, but not limited to, other aircraft, aerodrome vehicles, aerodrome signage, foreign objects and debris, poles, wildlife, buildings, and any other type of object that can pose a threat to the ownship.

The system 100 is configured to be active whilst performing operations on or near the aerodrome surface, and to cease operation when the ownship is sufficiently far from the aerodrome. For example, the system 100 starts monitoring the environment as the ownship approaches the runway for landing, remains active during surface operations, and ceases monitoring the environment after take-off. One possible coverage volume within which the system 100 is active is within 10,000 m (e.g., within 5,000 m) of the aerodrome and/or below 500 m (e.g., below 300 m) above the elevation of the aerodrome surface.

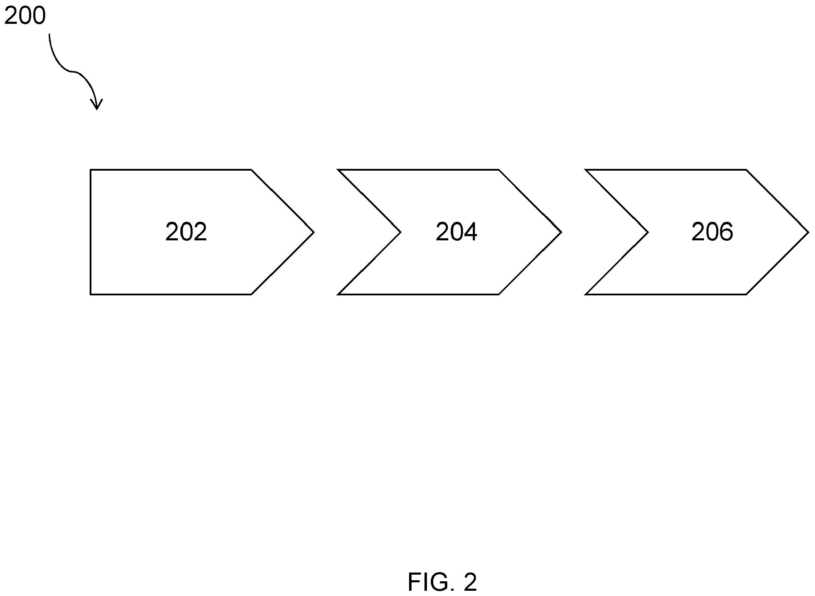

Figure 2 shows a process flow diagram illustrating the steps of a method 200 in accordance with one or more examples of the present disclosure. The examples described previously herein in the context of the system 100 should be interpreted to extend to the method 200. In an example, the method 200 is performed by the processor 134. It is further recognised, however, that the method 200 is not limited to the system 100.

The method 200 aggregates the output of both ownship and exogenous sensors to provide a holistic view of the obstacles around the ownship. The method then contextualises this data to determine the relevance of the detected obstacles. This is achieved via a data fusion step and a data contextualisation step. The method 200 therefore comprises method steps including, but not limited to, ownship data fusion block 202, exogenous data fusion block 204, and data contextualisation block 206.

In the ownship data fusion block 202, data received from the ownship subsystems, e.g., the non-cooperative sensing systems 112 and the navigation systems 122, are fused together to provide a first output. The first output comprises an initial view of the detected objects in the form of an initial list, which provides a situational awareness based solely on data generated by the ownship sensors. In an example, the initial list of objects is provided along with georeferenced information regarding the position, velocity and heading of each object.

In the exogenous data fusion block 204, data received from external sources, e.g., the cooperative sensing systems 114 and the external surveillance systems and services 116, are added and fused together with the first output of the ownship data fusion block 202 to provide a second output. The second output comprises an aggregated list of detected objects. The second output also comprises information relating to object positions, velocities and any other available information. This data is provided from a different reference frame to the ownship data.

For example, information contained in the databases 128 is provided in a world reference frame using latitude and longitude values, while information provided by the ownship data fusion block 202 is provided in an ownship reference frame using range and bearing. The exogenous data fusion block 204 performs the relevant coordinate transformations to allow the data from the databases 128 to be used in combination with the first output of the ownship data fusion block 202. This data is then used to correlate detected objects with the position of known buildings and airport structures.

The data fusion step comprises solely the ownship data fusion block 202, solely the exogenous data fusion block 204, or any combination thereof.

In the data contextualisation block 206, the second output (i.e., the output of the exogenous data fusion block 204) is contextualised using data provided by the support systems 120.

For example, the data is used to determine relevance of the detected objects in the form of threat levels, as well as providing alerts and indications to the downstream consumers. The alerts and indications include graphical items displayed on the HMIs 142 or data that are used by a guidance system for avoiding collisions with the detected objects. The HMIs 142 include audio feedback to the crew in the form of aural alerts and/or warnings.

By way of example, if it is known where the runway edges are located, the data contextualisation block 206 configures the output such that all objects located outside of the runway are excluded when providing information to the output systems 140.

By way of an additional example, alerts are generated when an object is detected along a taxi route assigned to the ownship, since the object may present a threat. Alerts are also generated when a conflict with another aircraft manoeuvring on the surface is detected or predicted.

The information inferred by the data fusion block 204 is used to implement prediction capabilities to support the data contextualisation block 206. For example, airport maps and other aircraft position and velocity information is used to predict potential taxi routes, which is then used to identify potential conflicts with the taxi route assigned to the ownship.

The method 200 leverages data fusion techniques to aggregate and correlate the detections of multiple sensing systems with the prior knowledge of the environment. For example, when the fields of view or coverage areas of two or more sensing systems overlap, the detections of objects in the overlapping regions are correlated to identify a set of unique objects in the region. This provides accurate information regarding the position and velocity of each object, leveraging the availability of multiple detections and associated measurements for the same object.

This information aggregation is also used to identify and classify objects, e.g., to discriminate a marshaller wearing a reflective vest and/or holding a light wand from an ordinary person. The information aggregation is also used to classify vehicles from the set of detected objects, e.g., to discriminate an airport surface vehicle from an aircraft or a rotorcraft.

Data fusion techniques used by the method 200 may adopt heuristic algorithms and/or machine learning models. For example, neural networks may be used for classification.

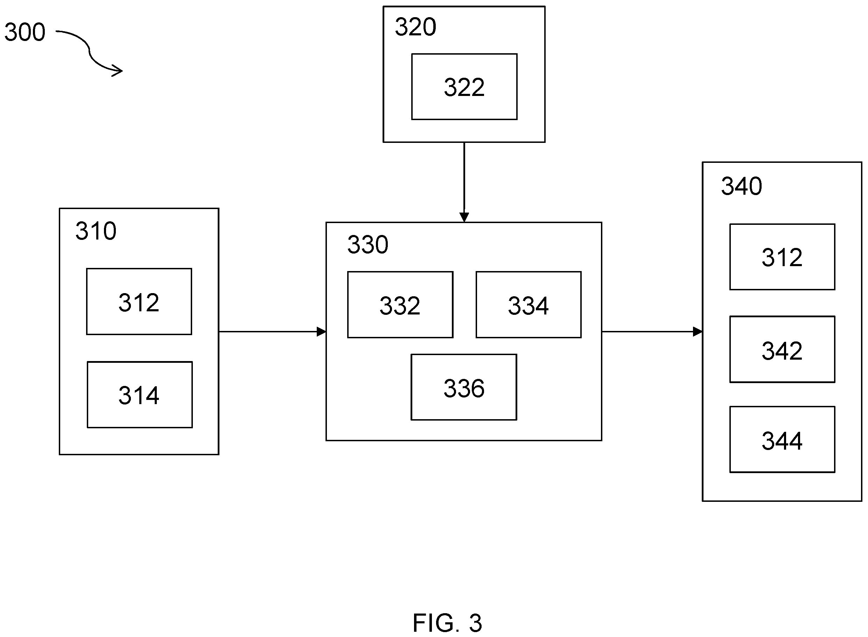

Figure 3 shows an exemplary implementation of Figure 1, wherein a system 300 is based upon weather radar and ADS-B input information. The system 300 comprises at least input systems 310, support systems 320, a processing system 330 and output systems 340.

The input systems 310 comprise a plurality of sensing systems configured to provide and process input information related to detected objects. This input information is received by a data input module 332 of the processing system 330. The input systems 310 comprise an ownship weather radar 312 and an ADS-B receiver 314. The ownship weather radar 312 is a non-cooperative sensing system, whilst the ADS-B receiver 314 is a cooperative sensing system.

The ownship weather radar 312 processes information in order to detect objects within its field of view and range. The ownship weather radar 312 also derives information regarding the position and velocity of the detected objects with respect to the ownship. The ADS-B receiver 314 parses messages broadcasted by other cooperative vehicles within and close to the aerodrome, in order to extract information about the vehicle's position, velocity and heading. In an example, this information is georeferenced, e.g., expressed in terms of latitude, longitude and altitude.

The support systems 320 comprise a plurality of other aircraft systems configured to provide support information not directly related to the detected objects. This support information is also provided to the data input module 332 of the processing system 330. The support systems 320 comprise at least a navigation system 322.

The navigation system 322 provides information about ownship position, velocity and heading. In an example, the information provided by the navigation system 322 is used to convert data from the ownship weather radar 312 into a georeferenced coordinate system.

The ownship subsystems comprise the ownship weather radar 312, the ADS-B receiver 314 and the navigation system 322.

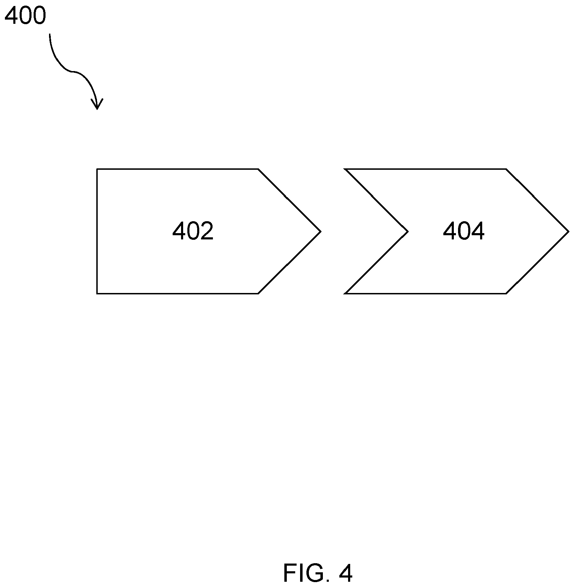

The processing system 330 comprises the data input module 332, a processor 334, and a data output module 336. The processor 334 processes, at the data input module 332, the data and information collected by the input systems 310 and the support systems 320 to derive a contextualised list of objects detected and their features, as well as providing alerts and indications about possible collisions and avoidance measures. The processor 334 is configured to carry out the various processes or methods described in relation to Figure 4.

The output systems 340 comprise downstream consumers which receive output information from the data output module 336 of the processing system 330 in the form of the contextualised list of objects detected and their features, as well as alerts and indications about possible collisions and avoidance measures. The downstream consumers include an HMI 342, ownship guidance systems 344 and the ownship weather radar 312.

The HMI 342 comprises a dedicated HMI in the flight deck. The HMI 342 provides information to the pilot and/or flight crew. The HMI 342 communicates information via audio, visual and/or tactile means, e.g., via one or more of a screen, a dashboard, an audio alert and a vibrating seatback. In a preferred example, the HMI 342 provides information such as maps and routes, in addition to information about the detected objects. The ownship guidance systems 344 include taxi guidance systems for automated control of aircraft movement on the aerodrome surface.

The output information from the data output module 336 of the processing system 330 is also provided back to the ownship weather radar 312. The processed information about detected objects improves the performance of the ownship weather radar 312 by providing data in order to resolve ambiguities in its detection algorithms.

The system 300 is configured to support a flight crew on a manned aircraft. The system 300 is also configured to be used by a downstream system for controlling movement of the aircraft on the ground, such as in autonomous taxiing operations.

The system 300 detects objects such as, but not limited to, other aircraft, aerodrome vehicles, aerodrome signage, foreign objects and debris, poles, wildlife, buildings, and any other type of object that can pose a threat to the ownship.

The system 300 is configured to be active whilst performing operations on or near the aerodrome surface, and to cease operation when the ownship is sufficiently far from the aerodrome. For example, the system 300 starts monitoring the environment as the ownship approaches the runway for landing, remains active during surface operations, and ceases monitoring the environment after take-off. One possible coverage volume within which the system 300 is active is within 10,000 m (e.g., within 5,000 m) of the aerodrome and/or below 500 m (e.g., below 300 m) above the elevation of the aerodrome surface.

Figure 4 shows a process flow diagram illustrating the steps of a method 400 in accordance with one or more examples of the present disclosure. The examples described previously herein in the context of the system 300 should be interpreted to extend to the method 400. In an example, the method 400 is performed by the processor 334. It is further recognised, however, that the method 400 is not limited to the system 300.

The method 400 comprises method steps including, but not limited to, data fusion block 402, and data contextualisation block 404.

In the data fusion block 402, data received from the ownship weather radar 312 and the ADS-B receiver 314 are fused together to provide an output. The output of the data fusion block 402 comprises an aggregated list of objects detected. In an example, the aggregated list of objects is provided along with georeferenced information regarding the position, velocity and heading of each object.

In the data contextualisation block 404, the output of the data fusion block 402 is combined with the information from the navigation system 322, and analysed to provide a second output. The output of the data contextualisation block 404 is provided in the form of a contextualised list of objects detected and their features, as well as alerts and indications about possible collisions and avoidance measures.

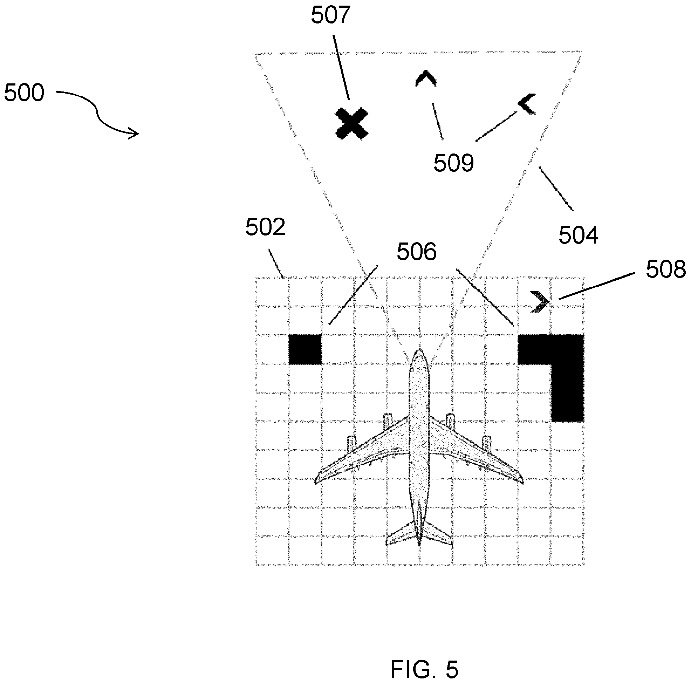

Figure 5 shows a possible structure 500 for proximity zones which are monitored by the systems 100, 300. The environment around the ownship is divided into zones based on proximity to the ownship, in order to aid with data processing and display.

Different data fusion algorithms are used for different zones, to tailor to the specific characteristics and needs of each zone. In particular, different sensors are more suitable to different ranges, and thus different zones are associated with different sensor output data. Objectives for each zone are appropriately weighted to fuse and prioritise data such that a comprehensive situational awareness of the ownship environment is provided. The data fusion techniques allow the aircraft to track any one object as the object moves through different proximity zones.

In the present example, the information provided by the system is organised and collected according to a near-field zone 502 and a far-field zone 504. This allows for simpler information density representation management.

The near-field zone 502 is represented using occupancy grid maps. The data fusion algorithms specific to this type of representation are adopted to aggregate the data of detected near-field objects 506 and of detected near-field vehicles 508 within the near-field zone range. For example, sensing systems covering the near-field zone provide the position data for the detected near-field objects 506 through an occupancy grid map. The data fusion techniques blend the different maps provided by the sensing systems, along with other information such as uncertainty in detection.

The far-field zone 504 is characterized by sparse detections of detected far-field objects 507, and the detection of detected far-field vehicles 509. Their data is processed using a set of Kalman Filters which provide information and predictions about position and velocity.

The systems and methods as described herein are suitable for both manned and unmanned aircraft.

The systems and methods as described herein have the ability to operate as a node in a network of sensors by up-linking localized threat information to an external surveillance service.

The systems and methods as described herein provide a multi-sensor solution that uses data fusion techniques to leverage the detection capabilities of different sensing technologies. This assists in overcoming the flaws, such as blind spots and limited fields of view, of solutions based on single sensing technologies.

It will be appreciated by those skilled in the art that the disclosure has been illustrated by describing one or more specific examples thereof, but is not limited to these examples; many variations and modifications are possible, within the scope of the accompanying claims.

## Claims

1. A collision avoidance system (130) for aggregating and processing data when an aircraft is on or near the ground, the collision avoidance system comprising:
a data input module (132) configured to obtain object data and contextual data from a plurality of aircraft systems (110, 120), wherein:
the object data relates to objects detected around the aircraft; and
the contextual data relates to information about the aircraft's route and environment;
a processor (134) configured to:
combine the object data into an aggregated list of detected objects; and
label the aggregated list of detected objects using the contextual data to form a contextualised list of detected objects for use in determining collision avoidance; and
a data output module (136) configured to output the contextualised list of detected objects to a set of output systems (140).

2. The collision avoidance system as claimed in claim 1, wherein the collision avoidance system is configured to, when the aircraft is within a specified range of the aerodrome surface, commence operation as the aircraft approaches the ground, remain active during aerodrome surface operations, and cease operation after take-off.

3. The collision avoidance system as claimed in claim 1 or 2, wherein the plurality of aircraft systems comprises input systems (110) configured to provide the object data, optionally wherein the plurality of aircraft systems comprises support systems (120) configured to provide the contextual data.

4. The collision avoidance system as claimed in claim 3, wherein the input systems (110) comprise one or more of:
non-cooperative sensing systems (112) comprising sensors on board the aircraft capable of detecting objects not actively providing information about themselves;
cooperative sensing systems (114) comprising sensors capable of detecting data transmitted by other vehicles relating to the position and velocity of the other vehicles; and
external surveillance systems and services (116) capable of detecting data about objects on the aerodrome surface.

5. The collision avoidance system as claimed in claim 3 or 4, wherein the support systems (120) comprise one or more of:
navigation systems (122) which are capable of providing information about one or more of the aircraft's position, velocity and heading;
taxi navigation and management systems (124, 126) which are capable of providing information about one or more of the aircraft's position, taxi route and the trajectory of other vehicles;
databases (128) which are capable of providing information about one or more of: airport runways, airport taxiways, non-movement area layouts and aerodrome structures; and
the non-cooperative sensing systems (112).

6. The collision avoidance system as claimed in any one of the preceding claims, wherein the processor (134) is arranged to aggregate data from multiple sensing systems using one or more of heuristic algorithms, machine learning models and neural networks.

7. The collision avoidance system as claimed in any one of the preceding claims, wherein the output systems (140) comprise one or more of:
human-machine interfaces (142), which are capable of providing information to the pilot and/or flight crew;
ownship guidance systems (144) comprising taxi guidance systems which are capable of providing automated control for movement of the aircraft on the aerodrome surface;
the non-cooperative sensing systems (112) which, using the contextualised list of detected objects, are capable of supporting internal detection and/or tracking and resolving ambiguities in their detection algorithms; and
the external surveillance systems and services (116) which, using the contextualised list of detected objects, are capable of improving the external surveillance systems and services' situational awareness of connected clients, and/or improving the situational awareness of the connected clients.

8. The collision avoidance system as claimed in any one of the preceding claims, wherein the aggregated list of detected objects is provided with georeferenced information regarding the position, velocity and heading of each object.

9. The collision avoidance system as claimed in any one of the preceding claims, wherein the aircraft's environment is divided into proximity zones based on proximity to the aircraft, such that the collision avoidance system is configured to track any one object as the object moves through different proximity zones.

10. The collision avoidance system as claimed in claim 9, wherein the proximity zones comprise a near-field zone (502) and a far-field zone (504), optionally wherein the near-field zone is represented using occupancy grid maps and the far-field zone provides information and predictions about object position and/or velocity using Kalman filters.

11. A method (200) of aggregating and processing data when an aircraft is on or near the ground, the method comprising:
obtaining, using a data input module (132), object data and contextual data from a plurality of aircraft systems (110, 120), wherein;
the object data relates to objects detected around the aircraft; and
the contextual data relates to information about the aircraft's route and environment;
combining, at a processor (134), the object data into an aggregated list of detected objects;
labelling, at the processor (134), the aggregated list of detected objects using the contextual data to form a contextualised list of detected objects for use in determining collision avoidance; and
outputting, using a data output module (136), the contextualised list of detected objects to a set of output systems (140).

12. The method as claimed in claim 11, wherein the combining comprises aggregating data from the aircraft sensors, optionally wherein the combining comprises aggregating data from sensors external to the aircraft.

13. The method as claimed in claim 11 or 12, wherein the combining of the object data into an aggregated list of detected objects further comprises providing georeferenced information regarding the position, velocity and heading of each object.

14. The method as claimed in claim 11, 12 or 13, wherein the labelling comprises using the contextual data to determine the relevance of the detected objects to the aircraft, further comprising determining one or more of threat level information, alerts and indications for each of the detected objects.
